# EUROPEAN PATENT APPLICATION

(11) **EP 2 977 389 A1**
(43) Date of publication of application: **27.01.2016**
(21) Application number: 14770783.0
(22) Date of filing: 12.02.2014
(51) Int. Cl.: C08F 2/44, C08F 2/50, G02B 1/04, G02C 7/00

(54) **PHOTO-CURABLE COMPOSITION AND MOLDED ARTICLE**

(30) Priority: 22.03.2013 JP 2013060847
(71) Applicant: Soken Chemical & Engineering Co., Ltd., Toshima-ku Tokyo 171-8531 (JP)
(72) Inventor: UTSUNOMIYA, Shin, Sayama-shi Saitama 350-1320 (JP)
(74) Representative: de Bresser, Sara Jean
(86) International application number: PCT/JP2014/053155
(87) International publication number: WO 2014/148148

(57) **Abstract**

[Object] To conveniently, rapidly, and precisely provide a thick molded article without the need for large equipment at high temperature and high pressure and a heat and pressure resistant mold.

[Means of Realizing the Object] A photocurable composition for molding, the composition including a polymer compound (A), a reactive diluent (B), and a photopolymerization initiator (C), wherein the polymer compound (A) includes a constitutional unit consisting of a compound of Formula (1) below and/or a constitutional unit consisting of a compound of Formula (2) below as a constituent monomeric unit, and the total weight of the compound of Formula (1) and/or the compound of Formula (2) is 60% by weight or more of the overall weight of the polymer compound (A), and wherein the reactive diluent (B) includes the compound of Formula (1) and/or the compound of Formula (2).

## Description

### Technical Field

The present invention relates to a photocurable resin composition for molding and, in particular, to a photocurable resin composition that can be used for thick articles and structures and that has low shrinkage and high productivity, and a molded article using the composition.

### Background Art

Polymethyl methacrylates have good optical properties such as transmission and birefringence and have been widely used for molded articles such as resin optical components. Examples of techniques for molding polymethyl methacrylates include a technique of placing the resin melted at high temperature in a mold under high pressure. However, such technique requires expensive and large extrusion equipment and a heat and pressure resistant mold, takes long time to produce articles due to heating and cooling procedures, and requires a large amount of energy.

In addition to the method of melting and molding polymethyl methacrylates, a method of placing methyl methacrylate, which is the precursor of polymethyl methacrylate, in a mold and polymerizing the methyl methacrylate is described in Patent Document 1. However, the methyl methacrylate has a high volume shrinkage during polymerization, and thus it has been difficult to obtain a precision molded article.

A method of using a photopolymerizable composition that includes urethane acrylate as a photopolymenzable resin and a photopolymerization initiator to obtain a molded article, as described in Patent Document 2, has also been widely used for, for example, various coatings, microlens arrays, and three-dimensionally shaped articles, as the method can provide a cured article within a few seconds to a few minutes. However, such method can only provide a cured article that has a thickness of a few millimeters at most, and thus it has been very difficult to obtain a structural member and a large part.

Examples of known methods for obtaining a thick molded article include a method of using an epoxy resin and a photoacid generator, as described in Patent Document 3. Although such method can provide a thick molded article that has a thickness of 30 mm or more, the method has the problems of, for example, a long period of time required for curing, yellowing of the resin, and use of an expensive and harmful heavy-metal compound as the photoacid generator.

### RELATED ART DOCUMENTS

### PATENT DOCUMETNTS

Patent Document 1: Japanese Unexamined Patent Application Publication No. H11-223704
Patent Document 2: Japanese Unexamined Patent Application Publication No. 2008-038117
Patent Document 3: Japanese Patent No. 3197907

### Summary of the Invention

### Problems to be Solved by the Invention

In view of the foregoing, it is an object of the present invention to provide a photocurable composition for casting (for molding), the composition capable of conveniently, rapidly, and precisely providing a thick molded article having a thickness of more than 5 mm using a photocuring technique that can rapidly mold an inexpensive and highly safe acrylate compound without the need for large equipment at high temperature and high pressure and a heat and pressure resistant mold needed for, for example, injection-molding polymethyl methacrylate, and a molded article using the composition.

### Means of Solving the Problems

As a result of assiduous research intended to solve the problems described above, the inventors of the present invention have found that a photocurable composition for molding, the composition including a polymer compound that includes a high percentage of a certain cycloaliphatic acrylate, a certain reactive diluent, and a photopolymerization initiator as essential components, can provide a highly productive and precision molded article by photocuring, thereby completing the present invention.

In particular, the photocurable composition for molding according to the present invention includes a polymer compound (A), a reactive diluent (B), and a photopolymerization initiator (C), wherein the polymer compound (A) includes a constitutional unit consisting of a compound of Formula (1) below and/or a constitutional unit consisting of a compound of Formula (2) below as a constituent monomeric unit, wherein the total weight of the compound of Formula (1) and/or the compound of Formula (2) is 60% by weight or more of the overall weight of the polymer compound (A), and wherein the reactive diluent (B) includes the compound of Formula (1) and/or the compound of Formula (2).

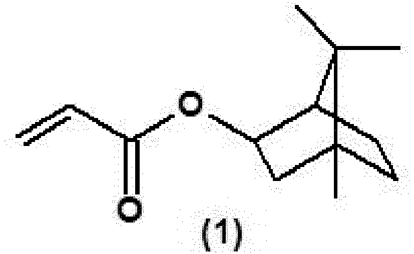

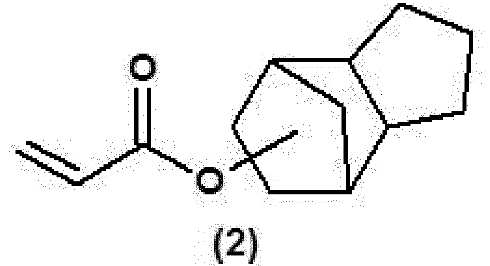

A photocurable composition for molding according to an aspect of the present invention further includes a mercaptan compound (D).

In a photocurable composition for molding according to an aspect of the present invention, the reactive diluent (B) includes a compound of Formula (3) below.

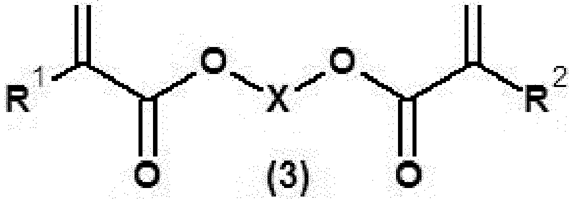

(In Formula (3), X represents a divalent group of 4 to 18 carbon atoms having a straight-chain, a branched-chain or a cyclic structure, and R¹ and R² each independently represent H or CH₃.)

A photocurable composition for molding according to an aspect of the present invention has a weight average molecular weight of the polymer compound (A) of 10,000-1,000,000 and includes 5-70 parts by weight of the polymer compound (A) based on 100 parts by weight of the total of the polymer compound (A) and the reactive diluent (B).

A photocurable composition for molding according to an aspect of the present invention includes 0.01-0.5 parts by weight of the photopolymerization initiator (C) based on 100 parts by weight of the total of the polymer compound (A) and the reactive diluent (B).

In a photocurable composition for molding according to an aspect of the present invention, the photopolymerization initiator (C) is at least one selected from the group consisting of benzyl dimethyl ketal (for example, 2,2-dimethoxy-1,2-diphenylethan-1-one), 1-hydroxycyclohexyl phenyl ketone, 2-hydroxy-2-methyl-1-phenyl-propan-1-one, 1-[4-(2-hydroxyethoxy)phenyl]-2-hydroxy-2-methyl-1-propan-1-o ne, 2-hydroxy-1-{4-[4-(2-hydroxy-2-methyl propionyl)benzyl]phenyl}-2-methyl propan-1-one, 2,4,6-trimethyl benzoyl diphenyl phosphine oxide, and bis(2,4,6-trimethyl benzoyl)phenyl phosphine oxide.

In a photocurable composition for molding according to an aspect of the present invention, the mercaptan compound (D) is at least one selected from the group consisting of Formulas (4), (5), (6), and (7).

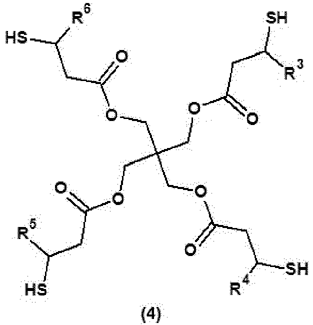

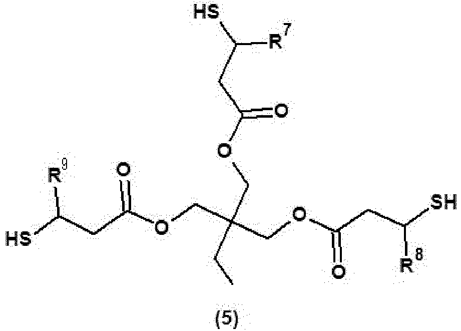

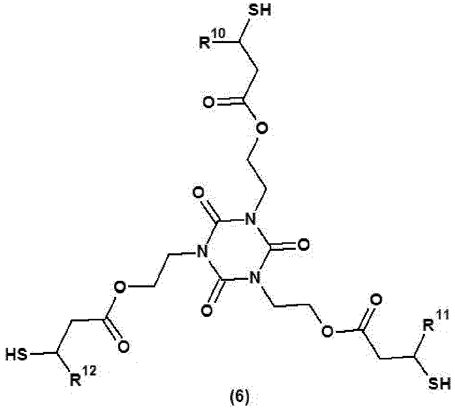

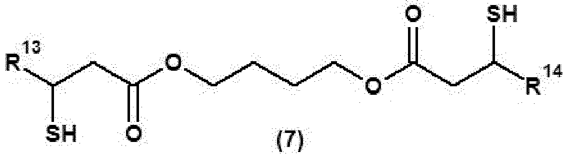

(In Formulas (4)-(7), R³-R¹⁴ each independently represent H or CH₃.)

A photocurable composition for molding according to an aspect of the present invention provides a molded article producing using a photocurable composition for molding according to an aspect of the present invention.

A photocurable composition for molding according to an aspect of the present invention provides a molded optical article that is produced using a photocurable composition for molding according to an aspect of the present invention and that has a minimum thickness of 5 mm or more.

### Effects of the Invention

A photocurable composition for molding according to the present invention can conveniently, rapidly, and precisely provide a thick molded article having a thickness of more than 5 mm using a photocuring technique that can rapidly mold an inexpensive and highly safe acrylate compound without the need for large equipment at high temperature and high pressure and a heat and pressure resistant mold needed for injection-molding polymethyl methacrylates.

### Brief Description of the Drawing

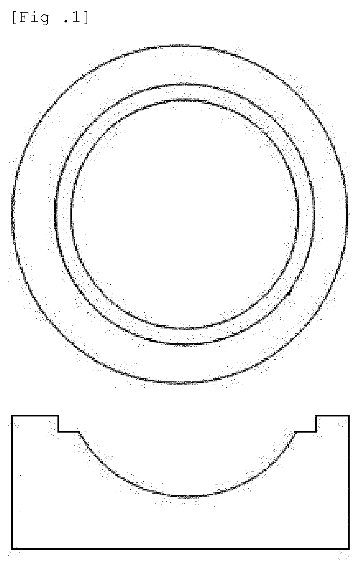

FIG. 1 illustrates an example of a lens mold that can be used to cure and mold a photocurable composition for molding according to the present invention.

### Mode for Carrying out the Invention

A photocurable composition for molding according to the present invention includes a polymer compound (A), a reactive diluent (B), and a photopolymerization initiator (C), wherein the polymer compound (A) includes a constitutional unit consisting of a compound of Formula (1) below and/or a constitutional unit consisting of a compound of Formula (2) below as a constituent monomeric unit, and the total weight of the compound of Formula (1) and/or the compound of Formula (2) is 60% by weight or more of the overall weight of the polymer compound (A), and wherein the reactive diluent (B) includes the compound of the Formula (1) and/or the compound of Formula (2).

Now, the individual components of the photocurable composition for molding according to the present invention will be described in detail.

### [Polymer Compound (A)]

The polymer compound (A) of the present invention is defined as a polymer component (nonvolatile) prepared by partially or completely polymerizing monomer components as constituents. More specifically, when the polymer compound (A) of the present invention is prepared by partial polymerization of a solvent-free system, the system after the partial polymerization includes a polymer component (nonvolatile) as the polymer compound (A) and an unreacted monomer component. In the present invention, only the polymer component is considered as the polymer compound (A).

The polymer compound (A), which constitutes a photocurable composition for molding according to the present invention, includes the compound of Formula (1) (i.e., isobornyl acrylate) and/or the compound of Formula (2) (i.e., dicyclopentanyl acrylate) as monomer units, in a total amount of 60% by weight or more and preferably 80% by weight or more based on the total weight (the overall weight) of the polymer compound (A). When the content of the compound (s) is less than 60% by weight, mechanical properties such as hardness required of the molded article intended by the present invention may not be obtained. The upper limit of the total weight of the compound of Formula (1) and/or the compound of Formula (2) is not critical, and the polymer compound (A) may be constituted only by the compound of Formula (1) and/or the compound of Formula (2).

A copolymerization component other than the compound of Formula (1) or (2) may also constitute the polymer compound (A) to the extent that the copolymerization component does not degrade the properties of the photocurable composition for molding according to the present invention. Examples of the copolymerization component include
unsaturated organic acids such as (meth)acrylic acid and maleic acid and anhydrides thereof,
(meth)acrylates such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, benzyl (meth)acrylate, cyclohexyl (meth)acrylate, 2-ethylhexyl (meth)acrylate, lauryl (meth)acrylate, stearyl (meth)acrylate, isobornyl methacrylate, dicyclopentanyl methacrylate, dicyclopentenyl (meth)acrylate, dicyclopentenyloxyethyl (meth)acrylate, 2-hydroxyethyl (meth)acrylate, hydroxypropyl (meth)acrylate, and glycidyl (meth)acrylate,
acrylamides such as N-methyl acrylamide, N-ethyl acrylamide, N-isopropyl acrylamide, N-methylol acrylamide, N-methyl methacrylamide, N-ethyl methacrylamide, N-isopropyl methacrylamide, N-methylol methacrylamide, N,N-dimethyl acrylamide, N,N-diethyl acrylamide, N,N-dimethyl methacrylamide, and N,N-diethyl methacrylamide,
styrenes such as styrene, α-methyl styrene, and hydroxy styrene,
N-vinyl compounds such as N-vinyl pyrrolidone, N-vinyl imidazole, N-vinyl formamide, and N-vinyl acetamide, and
indene. Among them, methyl acrylate, n-butyl acrylate, and lauryl acrylate are preferred for preventing cracks. When these copolymerizable monomers are used, it is preferred to include the monomers in an amount of 10% by weight or less based on the total weight of the polymer compound (A).

Additionally, multifunctional monomers may be used as constituents of the polymer compound (A) to the extent that the monomers do not undergo gelation. Examples of the multifunctional monomers include ethylene glycol di(meth)acrylate, polyethylene glycol di(meth)acrylate, propylene glycol di(meth)acrylate, polypropylene glycol di(meth)acrylate, tetraethylene glycol di(meth)acrylate, polytetraethylene glycol di(meth)acrylate, hexanediol di(meth)acrylate, nonanediol di(meth)acrylate, decanediol di(meth)acrylate, and dodecanediol di(meth)acrylate. When the multifunctional monomers are used, the monomers are preferably included in an amount of 2% by weight or less based on the total weight of the polymer compound (A).

Any process can be used to synthesize the polymer compound (A), such as radical polymerization, anionic polymerization, and cationic polymerization. Any polymerization techniques can be used, such as bulk polymerization, emulsion polymerization, suspension polymerization, and solution polymerization, and so called syrup polymerization, which is a process in which monomers are partially polymerized in the absence of a solvent, is preferred for productivity.

Any copolymerization process may be used such as random copolymerization, block copolymerization, and graft polymerization, and uniform random copolymerization is preferred when the composition is used for optical components.

The polymer compound (A) may have any molecular weight, and the polymer compound (A) preferably has a weight average molecular weight relative to polystyrene standards of 10,000-1,000,000 and preferably 8,000-800,000, because the resulting molded article has the necessary strength, the uncured photocurable composition for molding has appropriate rheology, which are preferred for both of the quality of the molded article and the operability.

The polymer compound (A) of the present invention may be included in any amount. For example, when the polymer compound (A) is included in an amount of 5-70 parts by weight based on 100 parts by weight of the total of the polymer compound (A) and the reactive diluent (B), the resulting molded article exhibits reduced cure shrinkage, and the uncured photocurable composition for molding has appropriate rheology, which are preferred for both of the molding accuracy and the operability. More preferably, the polymer compound (A) is included in an amount of 10-60 parts by weight.

### [Reactive Diluent (B)]

The reactive diluent (B) in the present invention is defined as monomer components that are not subjected to a polymerization reaction before the curing reaction. More specifically, when the polymer compound (A) of the present invention is prepared by partial polymerization of a solvent-free system, the system after the partial polymerization includes a polymer component (nonvolatile) as the polymer compound (A) and an unreacted monomer component. In the present invention, a combination of the unreacted monomer component and a reactive diluent component added separately is considered as the reactive diluent (B).

The reactive diluent (B) in the photocurable composition for molding according to the present invention includes the compound of Formula (1) below and/or the compound of Formula (2) below as essential components. Inclusion of the compound of Formula (1) and/or the compound of Formula (2) in the reactive diluent (B) allows for compatibility with the polymer compound (A) and results in a high-strength cured article.

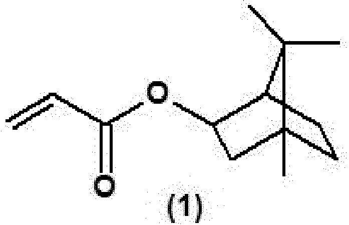

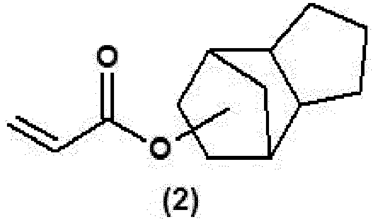

The compound of Formula (1) and/or the compound of Formula (2) may be included in any total amount based on the total weight of the reactive diluent (B), and the compound of Formula (1) and/or the compound of Formula (2) are preferably included in a total amount of 40% by weight or more and more preferably 50% by weight or more based on the total weight of the reactive diluent (B). The upper limit of the total amount of the compound of Formula (1) and/or the compound of Formula (2) based on the total weight of the reactive diluent (B) is not critical, and the reactive diluent (B) can be constituted only by the compound of Formula (1) and/or the compound of Formula (2).

For the strength of the cured article and cure speed, it is preferred to add a compound of Formula (3) below.

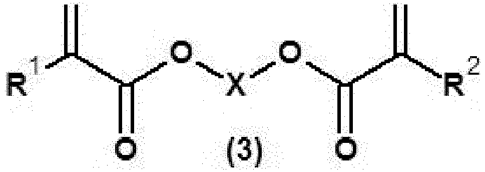

(In Formula (3), X represents a divalent group having of 4 to 18 carbon atoms having a straight-chain, a branched-chain or a cyclic structure, and R¹ and R² each independently represent H or CH₃.)

Specific examples of the compound of Formula (3) include butanediol di(meth)acrylate, hexanediol di(meth)acrylate, cyclohexanediol di(meth)acrylate, cyclohexane dimethanol di(meth)acrylate, nonanediol di(meth)acrylate, 2-methyl-1,8-octanediol di(meth)acrylate, decanediol di(meth)acrylate, dodecanediol di(meth)acrylate, dimethyloltricyclodecane di (meth) acrylate, tetraethylene glycol di(meth)acrylate, and trimethylolpropane di(meth)acrylate. Among them, nonanediol diacrylate, decanediol diacrylate, 2-methyl-1,8-octanediol diacrylate, and dimethyloltricyclodecane diacrylate are preferred for compatibility with the polymer compound (A).

When the compound of Formula (3) is used in addition to the compound of Formula (1) and/or the compound of Formula (2), the total weight of the compound of Formula (1) and/or the compound of Formula (2) and the compound of Formula (3) is preferably 75% by weight or more and more preferably 80% by weight or more based on the total weight of the reactive diluent (B).

Another polymerizable monomer may be used for the reactive diluent (B) to the extent that the monomer does not degrade the properties of the photocurable composition for molding according to the present invention. Examples of the polymerizable monomer include
unsaturated organic acids such as (meth)acrylic acid and maleic acid and anhydrides thereof,
(meth)acrylates such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, benzyl (meth)acrylate, cyclohexyl (meth)acrylate, 2-ethylhexyl (meth)acrylate, lauryl (meth)acrylate, stearyl (meth)acrylate, isobornyl methacrylate, dicyclopentanyl methacrylate, dicyclopentenyl (meth)acrylate, dicyclopentenyloxyethyl (meth)acrylate, 2-hydroxyethyl (meth)acrylate, hydroxypropyl (meth)acrylate, and glycidyl (meth)acrylate,
acrylamides such as N-methyl acrylamide, N-ethyl acrylamide, N-isopropyl acrylamide, N-methylol acrylamide, N-methyl methacrylamide, N-ethyl methacrylamide, N-isopropyl methacrylamide, N-methylol methacrylamide, N,N-dimethyl acrylamide, N,N-diethyl acrylamide, N,N-dimethyl methacrylamide, and N,N-diethyl methacrylamide,
styrenes such as styrene, α-methyl styrene, and hydroxy styrene,
indene,
N-vinyl compounds such as N-vinyl pyrrolidone, N-vinyl imidazole, N-vinyl formamide, and N-vinyl acetamide,
di (meth) acrylates such as ethylene glycol di (meth) acrylate, polyethylene glycol di(meth)acrylate, propylene glycol di(meth)acrylate, polypropylene glycol di(meth)acrylate, and polytetraethylene glycol di(meth)acrylate,
other (meth)acrylates such as trimethylolpropane tri(meth)acrylate, trimethylolpropane ethoxytri(meth)acrylate, trimethylolpropane propoxy tri(meth)acrylate, tetramethylolmethane tri(meth)acrylate, tetramethylolmethane tetra(meth)acrylate, dipentaerythritol penta(meth)acrylate, dipentaerythritol hexa(meth)acrylate, bisphenol A polyoxyethylene di(meth)acrylate, and ethoxylated isocyanuric acid tri(meth)acrylate, and
ε-caprolactone modified tris(2-acryloxyethyl)isocyanurate. These monomers may be used alone or in combination of two or more. When these polymerizable monomers are used for the reactive diluent, the monomers are preferably included in an amount of 25% by weight or less and more preferably 20% by weight or less based on the total weight of the reactive diluent (B).

The reactive diluent (B) of the present invention may be included in any amount. For example, when the reactive diluent (B) is included in an amount of 30-95 parts by weight based on 100 parts by weight of the total of the polymer compound (A) and the reactive diluent (B), the resulting molded article exhibits reduced cure shrinkage, and the uncured photocurable composition for molding has appropriate rheology, which are preferred for both of molding accuracy and operability. More preferably, the reactive diluent (B) is included in an amount of 40-90 parts by weight.

Therefore, the polymer compound (A) and the reactive diluent (B) are preferably included in a mass ratio of 5: 95-70: 30 and more preferably in a mass ratio of 10: 90-60: 40 based on 100 parts by weight of the total of the polymer compound (A) and the reactive diluent (B).

### [Photopolymerization Initiator (C)]

The photopolymerization initiator (C) of the present invention may be any photopolymerization initiator commonly used in the art, such as, for example, UV initiators and visible light initiators.

Examples of the photopolymerization initiator include
benzophenones such as benzophenone, 4-hydroxy benzophenone, bis-N,N-dimethylamino benzophenone, bis-N,N-diethylamino benzophenone, and 4-methoxy-4'-dimethylamino benzophenone,
thioxanthones such as thioxanthone, 2,4-diethylthioxanthone, isopropyl thioxanthone, chlorothioxanthone, and isopropoxy chlorothioxanthone,
anthraquinones such as ethylanthraquinone, benzanthraquinone, aminoanthraquinone, and chloroanthraquinone,
acetophenones such as N,N-dimethylaminoacetophenone,
benzoin ethers such as benzoin methyl ether, benzoin ethyl ether, and benzoin phenyl ether,
2,4,6-trihalomethyl triazines,
1-hydroxycyclohexyl phenyl ketone,
2,4,5-triarylimidazole dimers such as 2-(o-chlorophenyl)-4,5-diphenylimidazole dimer, 2-(o-chlorophenyl)-4,5-di(m-methoxyphenyl)imidazole dimer, 2-(o-fluorophenyl)-4,5-diphenylimidazole dimer, 2-(o-methoxyphenyl)-4,5-diphenylimidazole dimer, 2-(p-methoxyphenyl)-4,5-diphenylimidazole dimer, 2,4-di(p-methoxyphenyl)-5-phenylimidazole dimer, and 2-(2,4-dimethoxyphenyl)-4,5-diphenylimidazole dimer,
benzyl dimethyl ketal (for example, 2,2-dimethoxy-1,2-diphenylethan-1-one),
2-benzyl-2-dimethylamino-1-(4-morpholino phenyl)-butan-1-one, 2-methyl-1-[4-(methylthio)phenyl]-2-morpholino-1-propanone, 2-(dimethylamino)-2-[(4-methylphenyl)methyl]-1-[4-(4-morpholi nyl)phenyl]-1-butanone, 2-hydroxy-2-methyl-1-phenylpropan-1-one, 1-[4-(2-hydroxyethoxy)phenyl]-2-hydroxy-2-methyl-1-propan-1-o ne, and 2-hydroxy-1-{4-[4-(2-hydroxy-2-methyl propionyl)benzyl]phenyl}-2-methyl propan-1-one,
phenanthrenequinone and 9,10-phenanthrenequinone,
benzoins such as methylbenzoin and ethylbenzoin,
acridine derivatives such as 9-phenylacridine and 1,7-bis(9,9'-acridinyl)heptane,
acyl phosphine oxides such as 2,4,6-trimethyl benzoyl diphenyl phosphine oxide, bis(2,4,6-trimethyl benzoyl)phenyl phosphine oxide, and bis(2,6-dimethoxybenzoyl)-2,4,4-trimethyl pentyl phosphine oxide, and
oxime esters such as 1,2-octanedione,1-[4-(phenylthio)-,2-(O-benzoyloxime)] and ethanone,1-[9-ethyl-6-(2-methylbenzoyl)-9H-carbazol-3-yl]-,1-(O-acetyloxime). These initiators may be used alone or in combination of two or more.

Among these photopolymerization initiators, benzyl dimethyl ketal, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-o ne, 2-hydroxy-1-{4-[4-(2-hydroxy-2-methyl propionyl)-benzyl]phenyl}-2-methyl propan-1-one, 2,4,6-trimethyl benzoyl diphenyl phosphine oxide, and bis(2,4,6-trimethyl benzoyl)phenyl phosphine oxide are particularly preferred as they impart less color to the molded article and have good cure sensitivity as photopolymerization initiators.

Various sensitizers and accelerators may also be used in combination for the photopolymerization initiator (C) of the present invention. Examples of the accelerators include ethyl p-dimethylamino benzoate, isoamyl p-dimethylamino benzoate, N,N-dimethylethanolamine, N-methyldiethanolamine, and triethanolamine.

The photopolymerization initiator (C) of the present invention may be included in any amount. For example, when the photopolymerization initiator (C) is included in an amount of 0.01-0.5 parts by weight based on 100 parts by weight of the total of the polymer compound (A) and the reactive diluent (B), the resulting cured article has sufficient curability, and especially, the composition for molding has improved curability in the depth direction and is suitable for molding a thick article, which are preferred. More preferably, the photopolymerization initiator (C) is included in an amount of 0.02-0.5 parts by weight.

### [Mercaptan Compound (D)]

The mercaptan compound (D) may be used as a component of the photocurable composition for molding according to the present invention. The mercaptan compound plays a role as a chain transfer agent and has the functions of controlling a polymerization reaction and adjusting the molecular weight and the molecular weight distribution of the resulting polymer.

Examples of the mercaptan compound include
mercaptosuccinic acid, mercaptoacetic acid, thioglycolic acid, mercaptopropionic acid, methionine, cysteine, and thiosalicylic acid, and derivatives thereof,
mercaptoethanol, mercaptopropanol, mercaptobutanol, mercaptopropanediol, mercaptobutanediol, and hydroxybenzenethiol, and derivatives thereof,
butyl-3-mercapto propionate, methyl-3-mercapto propionate, 2,2-(ethylenedioxy)diethanethiol, ethanethiol, 4-methylbenzenethiol, dodecylmercaptan, propanethiol, butanethiol such as 1-butanethiol, pentanethiol, 1-octanethiol, cyclopentanethiol, cyclohexanethiol, thioglycerol, and 4,4-thiobisbenzenethiol,
mercapto-4-butyrolactone (also known as 2-mercapto-4-butanolide), 2-mercapto-4-methyl-4-butyrolactone, 2-mercapto-4-ethyl-4-butyrolactone, 2-mercapto-4-butyrothiolactone, and 2-mercapto-5-valerolactone,
2-mercapto-4-butyrolactam, N-methoxy-2-mercapto-4-butyrolactam, N-ethoxy-2-mercapto-4-butyrolactam, N-methyl-2-mercapto-4-butyrolactam, N-ethyl-2-mercapto-4-butyrolactam, N-(2-methoxy)ethyl-2-mercapto-4-butyrolactam, N-(2-ethoxy)ethyl-2-mercapto-4-butyrolactam, 2-mercapto-5-valerolactam, N-methyl-2-mercapto-5-valerolactam, N-ethyl-2-mercapto-5-valerolactam, N-(2-methoxy)ethyl-2-mercapto-5-valerolactam, N-(2-ethoxy)ethyl-2-mercapto-5-valerolactam, and 2-mercapto-6-hexanolactam, and
pentaerythritol tetrakis(3-mercapto propionate), 1,3,5-tris(3-mercaptobutyloxyethyl)-1,3,5-triazine-2,4,6(1H,3 H,5H)-trione, 1,4-bis(3-mercaptopropyloxy)butane, trimethylolpropane tris(3-mercapto propionate), trimethylolethane tris(3-mercapto propionate), pentaerythritol tetrakis(3-mercapto butyrate), 1,3,5-tris(3-mercaptobutyloxyethyl)-1,3,5-triazine-2,4,6(1H,3 H,5H)-trione, 1,4-bis(3-mercaptobutyryloxy)butane, trimethylolpropane tris(3-mercapto butyrate), and trimethylolethane tris(3-mercapto butyrate). These mercaptan compounds may be used alone or in combination of two or more.

Among the mercaptan compounds listed above, pentaerythritol tetrakis(3-mercapto propionate), 1,3,5-tris(3-mercaptobutyloxyethyl)-1,3,5-triazine-2,4,6(1H,3 H,5H)-trione, 1,4-bis(3-mercaptopropyloxy)butane, trimethylolpropane tris(3-mercapto propionate), trimethylolethane tris(3-mercapto propionate), pentaerythritol tetrakis(3-mercapto butyrate), 1,3,5-tris(3-mercaptobutyloxyethyl)-1,3,5-triazine-2,4,6(1H,3H,5H)-trione, 1,4-bis(3-mercaptobutyryloxy)butane, trimethylolpropane tris(3-mercapto butyrate), and trimethylolethane tris(3-mercapto butyrate) are preferred in terms of odor and coloration of the molded article. Compounds of Formulas (4)-(7) below are more preferred.

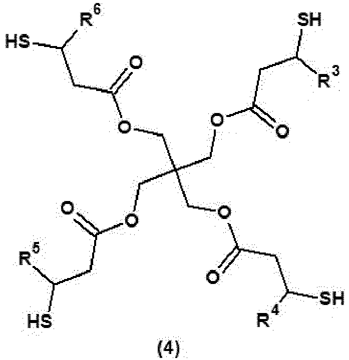

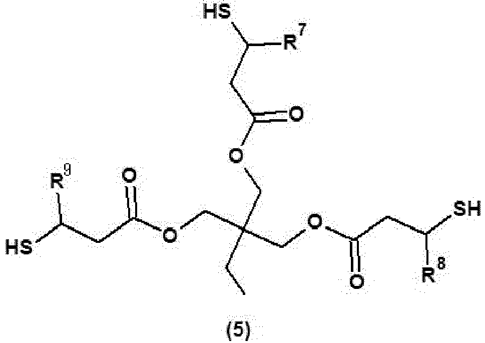

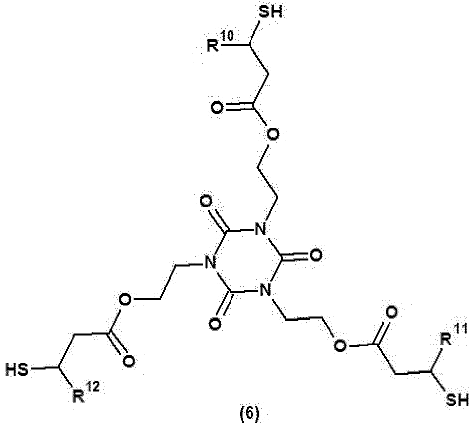

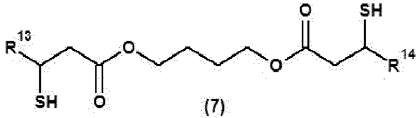

(In Formulas (4)-(7), R³-R¹⁴ each independently represent H or CH₃.)

Among the mercaptan compounds listed above, pentaerythritol tetrakis(3-mercapto butyrate), 1,3,5-tris(3-mercaptobutyloxyethyl)-1,3,5-triazine-2,4,6(1H,3 H,5H)-trione, and trimethylolpropane tris(3-mercapto butyrate) are particularly preferred.

The mercaptan compound (D) may be added when the polymer compound (A) is prepared or when the polymer compound (A) is mixed with other components.

It is preferred to include the mercaptan compound (D) in the photocurable composition for molding according to the present invention, as the time required to remove the photocurable composition, after curing, from a mold tends to be reduced.

The mercaptan compound (D) of the present invention may be included in any amount. For example, when the mercaptan compound (D) is included in an amount of 0.01-5.0 parts by weight based on 100 parts by weight of the total of the polymer compound (A) and the reactive diluent (B), an excessive polymerization reaction can be prevented, the molecular weight of the polymer can be controlled to be within an appropriate range, and consequently, a high-strength molded article can be obtained, which is preferred. More preferably, the mercaptan compound (D) is included in an amount of 0.02-3.0 parts by weight.

### [Other Components]

For aesthetic purposes and for providing functions such as a filtering function, the photocurable composition for molding according to the present invention can be colored to the extent that the effects of the present invention are not be impaired. A colorant to be added can be selected according to the purpose of the coloring. Examples of the colorant include phthalocyanine dyes, anthraquinone dyes, azo dyes, indigo dyes, coumarin dyes, triphenylmethane dyes, phthalocyanine pigments, anthraquinone pigments, azo pigments, quinacridone pigments, coumarin pigments, and triphenylmethane pigments, and mixtures thereof.

For the purpose of, for example, adjusting optical properties and increasing strength, a filler can be added to the photocurable composition for molding according to the present invention. The filler can be inorganic or organic particles.

For aiding solubility and increasing rheology, a solvent may be added to the photocurable composition for molding according to the present invention. Any solvent may be added, and the examples include
water,
ethylene glycols such as ethylene glycol, diethylene glycol, triethylene glycol, and tetraethylene glycol,
glycol ethers such as ethylene glycol monomethyl ether, diethylene glycol monomethyl ether, ethylene glycol diethyl ether, and diethylene glycol dimethyl ether,
glycol ether acetates such as ethylene glycol monoethyl ether acetate, diethylene glycol monoethyl ether acetate, and diethylene glycol monobutyl ether acetate,
propylene glycols such as propylene glycol , dipropylene glycol, and tripropylene glycol,
propylene glycol ethers such as propylene glycol monomethyl ether, propylene glycol monoethyl ether, dipropylene glycol monomethyl ether, dipropylene glycol monoethyl ether, propylene glycol dimethyl ether, dipropylene glycol dimethyl ether, propylene glycol diethyl ether, and dipropylene glycol diethyl ether,
propylene glycol ether acetates such as propylene glycol monomethyl ether acetate, propylene glycol monoethyl ether acetate, dipropylene glycol monomethyl ether acetate, and dipropylene glycol monoethyl ether acetate,
ketones such as acetone, methyl ethyl ketone, methyl isobutyl ketone, and cyclohexanone,
lactates such as methyl lactate and ethyl lactate,
acetates such as ethyl acetate and butyl acetate, and
dimethyl sulfoxide, N-methylpyrrolidone, dimethylformamide, and dimethylacetamide. These solvents may be used alone or in combination of two or more.

When a solvent is used, it is preferred to add the solvent in an amount of 5 parts by weight or less based on 100 parts by weight of the total of the polymer compound (A) and the reactive diluent (B), as the solvent does not inhibit curing of the photocurable composition for molding.

As other components, conventionally known components such as mold release agents, polymerization inhibitors, plasticizers, defoamers, and coupling agents can be added to the photocurable composition for molding according to the present invention, where necessary.

### [Molded Article]

The photocurable composition for molding according to the present invention is placed in a mold and is photocured to produce a molded article. Although the mold may have any shape and may be formed of any material, the mold should have an opening for light irradiation or a window made of a light transmissive material. The mold may be open or closed as long as the mold is configured to be exposed to light.

The photopolymerization may be performed under an atmosphere such as nitrogen or carbon dioxide to reduce oxygen inhibition in the photopolymerization.

Light at any wavelength may be used for the molding, such as UV light, visible light, and near-infrared light. Electron beam may also be used. Among them, the UV radiation is preferred for rapid curing and ease of handling. The temperature and the pressure in the molding process can be adjusted as desired, and the temperature and the pressure may be increased or reduced.

Examples of the molded article produced using the photocurable composition for molding according to the present invention include optical lenses such as Fresnel lenses, lenticular lenses, and spectacle lenses, automotive components, electronic elements, electric parts, furniture, architectural structures, toys, and containers. The photocurable composition for molding according to the present invention is especially suitable for a thick article that has a minimum thickness of more than 5 mm and that needs to exhibit clarity.

### [Examples]

Now, examples of the present invention will be described. The examples are merely illustrative and are not intended to limit the scope of the present invention.

For analysis, synthesized compounds were measured by a BM type viscometer (Brookfield viscometer) from Toki Sangyo Co., Ltd. GPC (gel permeation chromatograph) was performed at a temperature of 40°C and a flow rate of 0.5 mL/min using a TSKgel G7000HXL column, two TSKgel GMHXL columns, and a TSKgel G2500HXL column from Tosoh Corp. and THF (tetrahydrofuran) as an eluent.

### [Synthesis of Polymer Compound (A)]

The components were appropriately prepared to synthesize various polymer components.

### [Synthesis Example 1]

950 g of isobornyl acrylate (IBXA from Osaka Organic Chemical Industry Ltd.), 47.5 g of butyl acrylate (BA from Toagosei Co., Ltd.), and 0.6 g of dodecylmercaptan (THIOKALCOL 20 from Kao Corp.) were placed in a 2000 mL flask equipped with a stirrer and a condenser, and oxygen was removed under stirring and nitrogen bubbling for an hour. Then the solution was heated in a hot water bath to 60°C. A solution of 0.05 g of a polymerization initiator (V-70 from Wako Pure Chemical Industries, Ltd.) in 2.5 g of butyl acrylate was added to the solution and stirred. In 5 minutes, the temperature began to increase due to polymerization. In 20 minutes, the temperature increased to 115°C and then decreased to 60°C in 1 hour and 10 minutes. The solution was stirred for an additional 1 hour to give a viscous polymer solution (A1). The polymer solution (A1) had a nonvolatile content of 45. 8% by weight, a weight average molecular weight Mw as measured by GPC of 130 thousand, and a polydispersity Mw/Mn of 1.8. Thus, the polymer compound (A) of the present invention was included in an amount of 45. parts by weight based on 100 parts by weight of the polymer solution (A1).

### [Synthesis Example 2]

232.5 g of isobornyl acrylate (IBXA from Osaka Organic Chemical Industry Ltd.), 12.5 g of lauryl acrylate (LIGHT ACRYLATE L-A from Kyoeisha Chemical Co., Ltd.), and 0.15 g of KARENZ MT-PE1 as a mercaptan compound (from Showa Denko K.K.) were placed in a 2000 mL flask equipped with a stirrer and a condenser, and oxygen was removed under stirring and nitrogen bubbling for an hour. Then the solution was heated in a hot water bath to 60°C. A dispersion of 0.01 g of a polymerization initiator (V-70 from Wako Pure Chemical Industries, Ltd.) in 5.0 g of isobornyl acrylate was added to the solution and stirred. In 5 minutes, the temperature began to increase due to polymerization. In 40 minutes, the temperature increased to 84°C and then decreased to 60°C in an hour. The solution was stirred for an additional 1 hour to give a viscous polymer solution (A2). The polymer solution (A2) had a nonvolatile content of 34.8% by weight, a weight average molecular weight Mw as measured by GPC of 290 thousand, and a polydispersity Mw/Mn of 2.5. Thus, the polymer compound (A) of the present invention was included in an amount of 34.8 parts by weight based on 100 parts by weight the polymer solution (A2).

### [Synthesis Example 3]

232.5 g of dicyclopentanyl acrylate (FA-513A from Hitachi Chemical Co., Ltd.), 12.5 g of butyl acrylate (BA from Toagosei Co., Ltd.), and 0.15 g of KARENZ MT-PE1 as a mercaptan compound (from Showa Denko K.K.) were placed in a 2000 mL flask equipped with a stirrer and a condenser, and oxygen was removed under stirring and nitrogen bubbling for an hour. Then the solution was heated in a hot water bath to 60°C. A dispersion of 0.01 g of a polymerization initiator (V-70 from Wako Pure Chemical Industries, Ltd.) in 5.0 g of dicyclopentanyl acrylate was added to the solution and stirred. In 5 minutes, the temperature began to increase due to polymerization. In 40 minutes, the temperature increased to 84°C and then decreased to 60°C in an hour. The solution was stirred for an additional 1 hour to give a viscous polymer solution (A3). The polymer solution (A3) had a nonvolatile content of 34.5% by weight, a weight average molecular weight Mw as measured by GPC of 290 thousand, and a polydispersity Mw/Mn of 2.5. Thus, the polymer compound (A) of the present invention was included in an amount of 34.5 parts by weight based on 100 parts by weight of the polymer solution (A3).

### [Synthesis Example 4]

700 g of ethyl acetate, 285 g of isobornyl acrylate (IBXA from Osaka Organic Chemical Industry Ltd.), and 15 g of butyl acrylate (BA from Toagosei Co., Ltd.) were placed in a 2000 mL flask equipped with a stirrer and a condenser, and oxygen was removed under stirring and nitrogen bubbling for an hour. Then the solution was heated in a hot water bath to 80°C. 0.2 g of a polymerization initiator (V-601 from Wako Pure Chemical Industries, Ltd.) was added to the solution, and then the solution was polymerized by stirring for an additional 3 hours. The resultant viscous polymer solution was applied to release paper and dried at 80°C for 2 hours. The dried film was removed, ground up, and dried at 80°C under reduced pressure for 3 hours to give flaked polymer particles (A4). The polymer particles (A4) had a weight average molecular weight Mw as measured by GPC of 290 thousand and a polydispersity Mw/Mn of 3.9. Thus the polymer compound (A) of the present invention made up 100 parts by weight of the polymer particles (A4).

### [Synthesis Example 5 (Comparative Synthesis Example)]

100 g of isobornyl acrylate (IBXA from Osaka Organic Chemical Industry Ltd.), 16.8 g of butyl acrylate (BA from Toagosei Co., Ltd.), 80 g of lauryl acrylate (LIGHT ACRYLATE L-A from Kyoeisha Chemical Co., Ltd.), and 0.08 g of dodecylmercaptan (THIOKALCOL 20 from Kao Corp.) were placed in a 500 mL flask equipped with a stirrer and a condenser, and oxygen was removed under stirring and nitrogen bubbling for an hour. Then the solution was heated in a hot water bath to 60°C. A solution of 0 . 008 g of a polymerization initiator (V-70 from Wako Pure Chemical Industries, Ltd.) in 3.2 g of butyl acrylate was added to the solution and stirred. In 5 minutes, the temperature began to increase due to polymerization. In 11 minutes, the temperature increased to 116°C and then decreased to 60°C in an hour. The solution was stirred for an additional 1 hour to give a viscous polymer solution (A5). The polymer solution (A5) had a nonvolatile content of 42% by weight, a weight average molecular weight Mw as measured by GPC of 230 thousand, and a polydispersity Mw/Mn of 2.4. Thus the polymer compound (A) of the present invention was included in an amount of 42.0 parts by weight based on 100 parts by weight of the polymer solution (A5).

The formulations and the evaluation results of Synthesis Examples 1-5 are shown in Table 1. In Table 1, the amounts are based on 100 parts by weight of the total weight of the monomer components actually used. Unless otherwise specified in the table, the amounts in the table indicate parts by weight.

**Table 1**

| | | Synth. Ex. 1 (A1) | Synth. Ex. 2 (A2) | Synth. Ex. 3 (A3) | Synth. Ex. 4 (A4) | Synth. Ex. 5 (A5) |
|---|---|---|---|---|---|---|
| Monomer Component | IBXA | 95 | 93 | | 95 | 50 |
| | FA-513A | | | 93 | | |
| | BA | 5 | | 7 | 5 | 10 |
| | LA | | 7 | | | 40 |
| Chain Transfer Agent | THIOKALCOL 20 | 0.060 | | | | 0.040 |
| | MT-PE1 | | 0.060 | 0.060 | | |
| Polymerization Initiator | V-70 | 0.0050 | 0.0040 | 0.0040 | | 0.0040 |
| | V-601 | | | | 0.067 | |
| Evaluation | Nonvolatile Content (% by weight) | 45.8 | 34.8 | 34.5 | 100.0 | 42.0 |
| | Weight Average Molecular Weight Mw | 130000 | 290000 | 290000 | 290000 | 230000 |
| | Polydispersity Mw/Mn | 1.8 | 2.5 | 2.5 | 3.9 | 2.4 |

| | | | | | | |
|---|---|---|---|---|---|---|
| IBXA: isobornyl acrylate (from Shin Nakamura Chemical Co., Ltd.) FA-513A: dicyclopentanyl acrylate (from Hitachi Chemical Co., Ltd.) BA: butyl acrylate (from Toagosei Co., Ltd.) LA: lauryl acrylate (from Kyoeisha Chemical Co., Ltd.) THIOKALCOL 20: dodecylmercaptan (from Kao Corp.) MT-PE1: pentaerythritol tetrakis(3-mercapto butyrate) (from Showa Denko K.K.) V-70: 2,2'-azobis(4-methoxy-2,4-dimethylvaleronitrile) (from Wako Pure Chemical Industries, Ltd.) V-601: dimethyl 2-2'-azobis(2-methyl propionate) (from Wako Pure Chemical Industries, Ltd.) | | | | | | |

### [Examples 1-8]

The respective components shown in Table 2-1 below were mixed to prepare the photocurable compositions for molding.

### [Evaluation of Cure Depth]

The resultant photocurable compositions for molding of Examples 1-8 were added to a depth of 30 mm into a borosilicate glass vial having a diameter of 35 mm and a height of 78 mm (LABORAN SCREW VIAL No.7 from AS ONE Corp.). The wall of the glass vial was covered with an opaque tape so that the wall was not exposed to light due to diffuse reflection of irradiated light. The vial was irradiated twice, with a UV curing conveyor (from Fusion UV Systems, Inc.), under air at a peak intensity of 167 mW/cm² (365 nm) and a total dose of 1600 mJ/cm² (365 nm). After 5 minutes of completion of the irradiation, cure depth was measured from the sample liquid level for evaluation.

### [Evaluation of Curability]

The resultant photocurable compositions for molding of Examples 1-8 were placed in an aluminum lens mold having a diameter of 62 mm and a depth of 16 mm as illustrated in FIG. 1 so that the photocurable compositions for molding reached the top of the lens mold. After placing the photocurable compositions, the lens mold was covered with a PVA film having a thickness of 40 µm, and irradiated with UV via the PVA film, using a UV curing conveyor at a peak intensity of 167 mW/cm² and a total dose of 1600 mJ/cm². In evaluation, the composition cured after a single irradiation step was rated as very good, the composition cured after two irradiation steps was rated as good, the composition cured after three irradiation steps was rated as average, and the composition not cured even after three irradiation steps was rated as poor.

### [Evaluation of Dry Tack]

When the samples of Examples 1-8 used in evaluation of the curability were completely cured after the light irradiation and thus were non-tacky to the touch, the samples were rated as good. When the samples were cured into a rubber-like mass and thus were tacky to the touch, the samples were rated as poor.

### [Evaluation of Color]

After the light irradiation, the appearance of the samples of Examples 1-8 used in evaluation of the curability was visually observed.

### [Example 9]

The photocurable composition for molding was prepared and evaluated in the same manner as in Examples 1-8 except that the reactive diluent (B) was changed as indicated below.

### [Comparative Examples 1 and 2]

The photocurable compositions for molding were prepared and evaluated in the same manner as in Examples 1-8 except that the polymer compound (A5) was used in place of the polymer compound (A1) used in Example 1, and the reactive diluent was changed as indicated below.

### [Comparative Examples 3-6]

The photocurable compositions for molding were prepared and evaluated in the same manner as in Examples 1-8 except that the polymer compound (A3) was used in place of the polymer compound (A1) used in Example 1, and the reactive diluent shown in Table 2-2 was used in place of the reactive diluent (B) of the present invention.

### [Comparative Example 7]

The composition composed of 40 parts of bisphenol A diglycidylether (JER-828 from Mitsubishi Chemical Corp.), 40 parts of 3,4-epoxycyclohexylmethyl-3',4'-epoxycyclohexane carboxylate (CEL 2021P from Daicel Corp.), 10 parts of vinylcyclohexene monoxide (CEL 2000 from Daicel Corp.), 2 parts of bis-[4-(diphenylsulfonio)phenyl]sulfide bis dihexafluoro antimonate as a cationic polymerization initiator (CPI-101A from San-Apro Ltd.), 10 parts of bisphenol A epoxy acrylate as an acrylate compound (BP-4EA from Kyoeisha Chemical Co., Ltd.), and 1 part of 1-hydroxycyclohexyl phenyl ketone as a radical polymerization initiator (IRUGACURE-184 from BASF Corp.) was prepared according to Example 1 of Japanese Patent No. 3197907 and then evaluated in the same manner as in Examples 1-8.

### [Comparative Example 8]

The composition composed of 75 parts of urethane acrylate (UV-3000B from The Nippon Synthetic Chemical Industry Co., Ltd.), 20 parts of dicyclopentanyl methacrylate (FANCRYL FA-513M from Hitachi Chemical Co., Ltd.), 5 parts of butyl methacrylate (from Mitsubishi Gas Chemical Co., Inc.), 1 part of bis (2, 4, 6-trimethyl benzoyl)phenylphosphine oxide (IRGACURE-819 from BASF Corp.), 0.01 parts of polyacryloyloxypropyl polyorganosilsesquioxane (AC-SQ from Toagosei Co., Ltd.), 0.5 parts of octadecyl-3-(3,5-di-t-butyl-4-hydroxyphenyl)propionate (IRGANOX 1076 from BASF Corp.), and 0.5 parts of bis(2,2,6,6-tetramethyl-4-piperidyl)sebacate (TINUVIN 770DF from BASF Corp.) was prepared according to Example 1 of Japanese Unexamined Patent Application Publication No. 2008-038117 and then evaluated in the same manner as in Examples 1-8.

### [Comparative Examples 9 and 10]

The photocurable compositions for molding were prepared using a polymethyl methacrylate (DELPET 560F from Asahi Kasei Corp.) in place of the polymer compound (A) of the present invention and according to the formulation shown in Table 2-2 below and then evaluated in the same manner as in Examples 1-8.

### [Evaluation Summary 1]

All of the compositions of Examples 1-9 were completely cured to the bottom at a depth of 30 mm and had good dry tack, i.e., sufficient hardness. Although the cured article in Example 9 showed slight cloudiness, the article was sufficiently useful in applications other than those where high optical precision is required.

In contrast, although the compositions of Comparative Examples 1 and 2 had sufficient cure depth, the resulting cured articles were a rubber-like elastomer having insufficient dry tack, and were not suitable for the molded article intended by the present invention.

In all of Comparative Examples 3-6, the cured articles showed cloudiness and did not have sufficient curability.

The molded articles of Comparative Examples 7 and 8 had a cure depth of 5 mm or less and exhibited coloration. Thus Comparative Examples 7 and 8 were not suitable for the molded article intended by the present invention.

The compositions of Comparative Examples 9 and 10 produced using the polymethyl methacrylate in place of the polymer compound (A) of the present invention had no photocurabiliy at all.

The formulations and the evaluation results of Examples 1-9 and Comparative Examples 1-10 are shown in Table 2-1 and Table 2-2 below.

**Table 2-1**

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Polymer Solution/Particles | | A1 | 70 | 70 | | | | | | | |
| | | A2 | | | 70 | 70 | | | | | |
| | | A3 | | | | | 70 | | | | |
| | | A4 | | | | | | 30 | 30 | 36 | 36 |
| | | A5 | | | | | | | | | |
| | | DELPET 560F | | | | | | | | | |
| | Difunctional Acrylate | A-NON-N | 15 | 15 | | 15 | 15 | 15 | | | |
| | | A-DOD-N | | | | | | | 15 | | |
| | | SR213 | | | | | | | | | 15 |
| | | IBXA | 15 | 15 | 30 | 15 | | 55 | 55 | 64 | 55 |
| | | FA-513A | | | | | 15 | | | | |
| | | FA-513M | | | | | | | | | |
| Additional Reactive Diluent | | MMA | | | | | | | | | |
| | | BA | | | | | | | | | |
| | Other Reactive Diluent | BMA | | | | | | | | | |
| | | 2EHA | | | | | | | | | |
| | | LA | | | | | | | | | |
| | | BP-4EA | | | | | | | | | |
| | | JER-828 | | | | | | | | | |
| | | Gel 202 it | | | | | | | | | |
| | | CEL 2000 | | | | | | | | | |
| | | UV-3000B | | | | | | | | | |
| Mercapto Compound | | MT-PE1 | | 0.2 | 0.2 | 0.2 | 0.2 | 0.2 | 0.2 | 0.2 | 0.2 |
| Polymerization Intiator | | IRGACURE-184 | 0.1 | 0.1 | 0.1 | 0.1 | 0.1 | 0.1 | 0.1 | 0.1 | 0.1 |
| | | IRGACURE-819 | | | | | | | | | |
| | | LUCIRIN TPO | 0.05 | 0.05 | 0.05 | 0.05 | 0.05 | 0.05 | 0.05 | 0.05 | 0.05 |
| | | IRGANOX 1076 | | | | | | | | | |
| | | CPI-101A | | | | | | | | | |
| Other Additive | | TINUVIN 770DF | | | | | | | | | |
| | | AC-SQ | | | | | | | | | |
| Evaluation | | Cure Depth | >30 mm | >30 mm | >30 mm | >30 mm | >30 mm | >30 mm | >30 mm | >30 mm | >30 mm |
| | | Curability | good | Good | Good | very Good | very Good | very Good | very Good | Good | Average |
| | | Dry Tack | Good | Good | Good | Good | Good | Good | Good | Good | Good |
| | | Color | Clear and Colorless | Clear and Colorless | Clear and Colorless | Clear and Colorless | Clear and Colorless | Clear and Colorless | Clear and Colorless | Clear and Colorless | Slightly Cloudy |

**Table 2-2**

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|---|---|
| Polymer Solution/Particles | | A1 | | | | | | | | | | |
| | | A2 | | | | | | | | | | |
| | | A3 | | | | | | | | | | |
| | | A4 | | | 36 | 36 | 36 | 36 | | | | |
| | | A5 | 70 | 70 | | | | | | | | |
| | | DELPET 560F | | | | | | | | | 36 | 31 |
| | Difunctional Acrylate | A-NON-N | 15 | | | | | | | | | |
| | | A-DOD-N | | 15 | | | | | | | | |
| | | SR213 | | | | | | | | | | |
| | | IBXA | 15 | 15 | | | | | | | | |
| | | FA-513A | | | | | | | | | | |
| Additional Reactive Diluent | | FA-513M | | | | | | | | 20 | | |
| | | MMA | | | 64 | | | | | | 64 | 54 |
| | | BA | | | | 64 | | | | | | |
| | Other Reactive Diluent | BMA | | | | | | | | 5 | | |
| | | 2EHA | | | | | 64 | | | | | |
| | | LA | | | | | | 64 | | | | |
| | | BP-4EA | | | | | | | 10 | | | |
| | | JER-828 | | | | | | | 40 | | | |
| | | CEL 2021P | | | | | | | 40 | | | |
| | | CEL 2000 | | | | | | | 10 | | | |
| | | UV-3000B | | | | | | | | 75 | | |
| Mercapto Compoumd | | MT-PE1 | 0.2 | 0.2 | 0.2 | 0.2 | 0.2 | 0.2 | | 0.2 | 0.2 | 0.2 |
| Polymerization Initiator | | IRGACURE-184 | 0.1 | 0.1 | 0.1 | 0.1 | 0.1 | 0.1 | | | 0.1 | 0.1 |
| | | IRGACURE-819 | | | | | | | | 1 | | |
| | | LUCIRIN TPO | 0.05 | 0.05 | 0.05 | 0.05 | 0.05 | 0.05 | | | 0.05 | 0.05 |
| | | IRGANOX1076 | | | | | | | | 0.5 | | |
| | | CPI-101A | | | | | | | 2 | | | |
| Other Additive | | TINUVIN 770DF | | | | | | | | 0.5 | | |
| | | AC-SQ | | | | | | | | 0.01 | | |
| Evaluation | | Cure Depth | >30 mm | >30 mm | - | - | - | - | 5 mm | 3 mm | - | - |
| | | Curability | Average | Average | Poor | Poor | Poor | Poor | Good | Good | Poor | Poor |
| | | Dry Tack | Poor | Poor | | - | - | - | Good | Good | - | - |
| | | Color | Slightly Cloudy | Slightly Cloudy | Cloudy | Cloudy | Cloudy | Cloudy | Brown | Yellow | Clear and Colorless | Clear and Colorless |

The symbols in Table 2-1 and Table 2-2 have the following meanings.
A1: polymer solution (having a nonvolatile content of 45.8% by weight) prepared in Synthesis Example 1
A2: polymer solution (having a nonvolatile content of 34.5% by weight) prepared in Synthesis Example 2
A3: polymer solution (having a nonvolatile content of 34.5% by weight) prepared in Synthesis Example 3
A4: polymer solution (having a nonvolatile content of 100% by weight) prepared in Synthesis Example 4
A5: polymer solution (having a nonvolatile content of 42.0% by weight) prepared in Synthesis Example 5
DELPET 560F: polymethyl methacrylate (from Asahi Kasei Corp.)
A-NON-N:nonanediol diacrylate (from Shin Nakamura Chemical Co., Ltd.)
A-DOD-N: decanediol diacrylate (from Shin Nakamura Chemical Co., Ltd.)
SR213: butanediol diacrylate (from Sartomer Co.)
IBXA: isobornyl acrylate (from Shin Nakamura Chemical Co., Ltd.)
FA-513A: dicyclopentanyl acrylate (from Hitachi Chemical Co., Ltd.)
FA-513M: dicyclopentanyl methacrylate (from Hitachi Chemical Co., Ltd.)
MMA: methyl methacrylate (from Kuraray Co., Ltd.)
BA: butyl acrylate (from Toagosei Co., Ltd.)
BMA: butyl methacrylate (from Mitsubishi Gas Chemical Co., Inc.)
2EHA: 2-ethylhexyl acrylate (from Nippon Shokubai Co., Ltd.)
LA: lauryl acrylate (from Kyoeisha Chemical Co., Ltd.)
BP-4EA: bisphenol A epoxy acrylate (from Kyoeisha Chemical Co., Ltd.)
JER-828: bisphenol A diglycidylether (from Mitsubishi Chemical Corp.)
CEL 2021P: 3,4-epoxycyclohexylmethyl-3',4'-epoxycyclohexane carboxylate
(from Daicel Corp.)
CEL 2000: vinylcyclohexene monoxide (from Daicel Corp.)
UV-3000B: urethane acrylate (from The Nippon Synthetic Chemical Industry Co., Ltd.)
MT-PE1: pentaerythritol tetrakis(3-mercapto butyrate) (from Showa Denko K.K.)
IRGACURE-184: 1-hydroxy-cyclohexyl-phenyl-ketone (from BASF Corp.)
IRGACURE-819: bis(2,4,6-trimethyl benzoyl)-phenylphosphine oxide (from BASF Corp.)
LUCIRIN TPO: 2,4,6-trimethyl benzoyl-diphenyl-phosphine oxide (from BASF Corp.)
IRGANOX 1076: octadecyl-3-(3,5-di-tert-butyl-4-hydroxyphenyl)propionate (from BASF Corp.)
CPI-101A: bis-[4-(diphenylsulfonio)phenyl]sulfide bis dihexafluoro antimonate (cationic polymerization initiator from San-Apro Ltd.)
TINUVIN 770DF: bis(2,2,6,6-tetramethyl-4-piperidyl)sebacate (light stabilizer from BASF Corp.)
AC-SQ: polyacryloyloxypropyl organosilsesquioxane (from Toagosei Co., Ltd.)
Next, the type and the amount of the mercapto compound as a chain transfer agent were changed as indicated below to study the time required to cure the resulting compositions to provide the cured articles.

### [Examples 10-18]

The components shown in Table 3 below were mixed to prepare the photocurable compositions for molding.

### [Evaluation of Demold Time]

The resultant photocurable compositions for molding of Examples 10-18 were placed in an aluminum lens mold having a diameter of 62 mm and a depth of 16 mm as illustrated in FIG. 1 so that the photocurable compositions for molding reached the top of the lens mold. After placing the photocurable compositions, the lens mold was covered with a PVA film having a thickness of 40 µm, and irradiated with UV via the PVA film, using a UV curing conveyor at a peak intensity of 330 mW/cm² and a total dose of 2000 mJ/cm². In evaluation, the time required to remove the cured article from the mold after the irradiation was measured.

### [Evaluation of Color]

After the light irradiation, the appearance of the samples of Examples 10-18 used in evaluation of the demold time was visually observed.

### [Evaluation Summary 2]

The cured articles in all of Examples 10-18 had high clarity. Especially, Examples 10-13 and 15-17 using the compounds of Formulas (4)-(7) as the mercapto compound had a shorter time required to remove the cured article from the mold of 5-11 minutes, in addition to high clarity.

In Example 14 using dodecylmercaptan, although the resultant cured article had slightly red coloration, the article was sufficiently useful in applications other than those where high optical precision is required. Example 18 using no mercaptan compound required a longer time to remove the article from the mold.

The formulations and the evaluation results of Examples 10-18 are shown in Table 3 below.

**Table 3**

| | | | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| Polymer Solution/Particles | | A4 | 30 | 30 | 30 | 30 | 30 | 30 | 30 | 30 | 30 |
| Additional Reactive Diluent | Difunctional Acrylate | A-NON-N | 25 | 25 | 25 | 25 | 25 | 25 | 25 | 25 | 25 |
| | Other Reactive Diluent | IBXA | 45 | 45 | 45 | 45 | 45 | 45 | 45 | 45 | 45 |
| Mercapto Compound | | MT-PE1 | 0.5 | | | | | | | | |
| | | MT-NR1 | | 0.5 | | | | | | | |
| | | MT-BD1 | | | 0.5 | | | | | | |
| | | TPMB | | | | 0.5 | | | | | |
| | | THIOKALCOL 20 | | | | | 0.5 | | | | |
| | | PEMP | | | | | | 0.5 | | | |
| | | TEMPIC | | | | | | | 0.5 | | |
| | | TMMP | | | | | | | | 0.5 | |
| Polymerization Initiator | | IRGACURE-184 | 0.1 | 0.1 | 0.1 | 0.1 | 0.1 | 0.1 | 0.1 | 0.05 | 0.05 |
| | | LUCIRIN TPO | 0.05 | 0.05 | 0.05 | 0.05 | 0.05 | 0.05 | 0.05 | 0.05 | 0.05 |
| Evaluation | | Demold Time (min) | 5 | 7 | 11 | 8 | 10 | 7 | 9 | 8 | 27 |
| | | Color | Clear and Colorless | Clear and Colorless | Clear and Colorless | Clear and Colorless | Light Red | Clear and Colorless | Clear and Colorless | Clear and Colorless | Clear and Colorless |

| | | | | | | | | | | | |
|---|---|---|---|---|---|---|---|---|---|---|---|
| A4: polymer particles (having a nonvolatile content of 100% by weight) prepared in Synthesis Example 4 A-NON-N: nonanediol diacrylate (from Shin Nakamura Chemical Co., Ltd.) IBXA: isobornyl acrylate (from Shin Nakamura Chemical Co., Ltd.) MT-PE1: pentaerythritol tetrakis(3-mercapto butyrate) (from Showa Denko K.K.) MT-NR1: 1,3,5-tris(3-mercaptobutyloxyethyl)-1,3,5-triazin-2,4,6(1H,3H,5H)-trione (from Showa Denko K.K.) MT-BD1: 1,4-bis(3-mercaptobutyryloxy)butane (from Showa Denko K.K.) TPMB: trimethylolpropane tris(3-mercapto butyrate) (from Showa Denko K.K.) THIOKALCOL 20: dodecylmercaptan (from Kao Corp.) PEMP: pentaerythritol tetrakis(3-mercapto propionate) (from Sakai Chemical Industry Co., Ltd.) TEMPIC: tris-[(3-mercaptopropionyloxy)-ethyl]-isocyanurate (from Sakai Chemical Industry Co., Ltd.) T MMP: trimethylolpropane tris(3-mercapto propionate) (from Sakai Chemical Industry Co., Ltd.) IRGACURE-184: 2-hydroxy-cyclohexyl-phenyl-ketone (from BASF Corp.) LUCIRIN TPO: 2,4,6-trimethyl benzoyl-diphenyl-phosphine oxide (from BASF Corp.) | | | | | | | | | | | |

### [Example 19]

The photocurable composition of Example 3 was added to a depth of 25 mm into a polypropylene cup having an upper diameter of 63 mm, a lower diameter of 47 mm, and a height of 42 mm (pudding cup from AS ONE Corp.) and irradiated twice with UV using a UV curing conveyor at a peak intensity of 330 mW/cm² and a total dose of 2000 mJ/cm² with the cup opened to give a frusto-conical molded article. The resultant molded article was clear and colorless. And the molded article was non-tacky to the touch in evaluation of the dry tack and thus had sufficient curability.

Therefore, the photocurable composition according to at least one aspect of the present invention can provide a high-quality molded article without the need for a high-temperature resistant, high-pressure resistant, heavy, and expensive mold in a molding process and even by use of a low-strength, low heat-resistant, and inexpensive mold made of a thermoplastic resin.

### Industrial Applicability

The photocurable composition for molding according to the present invention can conveniently, rapidly, and precisely provide a thick article that has a minimum thickness of more than 5 mm and that needs to exhibit clarity, without the need for large equipment at high temperature and high pressure and a heat and pressure resistant mold needed for, for example, injection-molding polymethyl methacrylates.

## Claims

1. A photocurable composition for molding, the composition comprising
a polymer compound (A),
a reactive diluent (B), and
a photopolymerization initiator (C),
wherein the polymer compound (A) comprises a constitutional unit consisting of a compound of Formula (1) below and/or a constitutional unit consisting of a compound of Formula (2) below as a constituent monomeric unit, and the total weight of the compound of Formula (1) and/or the compound of Formula (2) is 60% by weight or more of the overall weight of the polymer compound (A), and
wherein the reactive diluent (B) comprises the compound of Formula (1) and/or the compound of Formula (2).

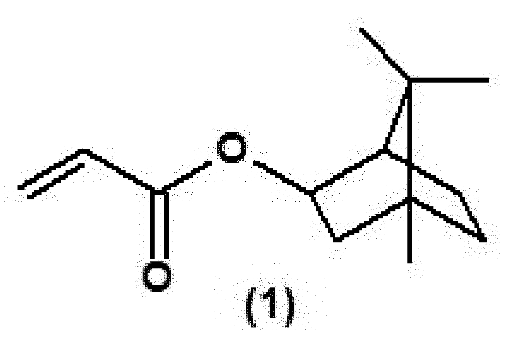

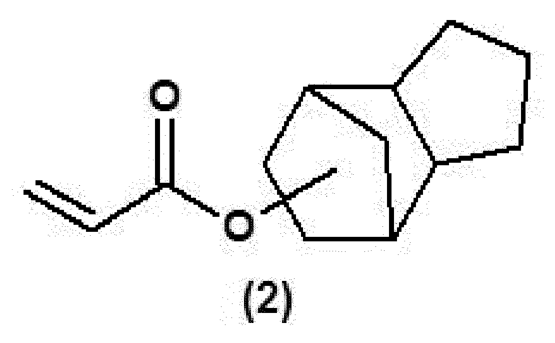

2. The photocurable composition for molding according to claim 1, the composition further comprising a mercaptan compound (D).

3. The photocurable composition for molding according to claim 1 or 2, wherein the reactive diluent (B) further comprises a compound of Formula (3) below, 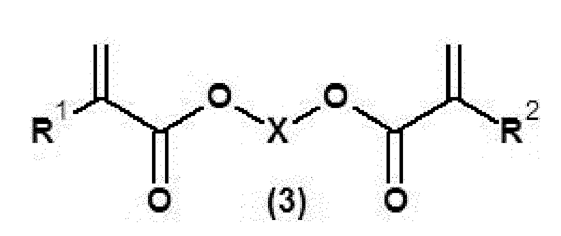 wherein X represent a divalentgroup of 4 to 18 carbon atoms having a straight chain, a branched-chain or a cyclic structure, and R¹ and R² each independently represent H or CH₃.

4. The photocurable composition for molding according to any one of claims 1-3,
wherein the polymer compound (A) has a weight average molecular weight of 10,000-1,000,000, and
wherein the polymer compound (A) is included in an amount of 5-70 parts by weight based on 100 parts by weight of the total of the polymer compound (A) and the reactive diluent (B).

5. The photocurable composition for molding according to any one of claims 1-4, wherein the photopolymerization initiator (C) is included in an amount of 0.01-0.5 parts by weight based on 100 parts by weight of the total of the polymer compound (A) and the reactive diluent (B).

6. The photocurable composition for molding according to any one of claims 1-5, wherein the photopolymerization initiator(C) is at least one selected from the group consisting of benzyl dimethyl ketal, 1-hydroxycyclohexyl phenyl ketone, 2-hydroxy-2-methyl-1-phenylpropan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]pheny l}-2-methyl propan-1-one, 2,4,6-trimethyl benzoyl-diphenyl-phosphine oxide, and bis(2,4,6-trimethyl benzoyl)-phenyl phosphine oxide.

7. The photocurable composition for molding according to any one of claims 2-6, wherein the mercaptan compound (D) is at least one compound selected from Formulas (4), (5), (6) and (7), 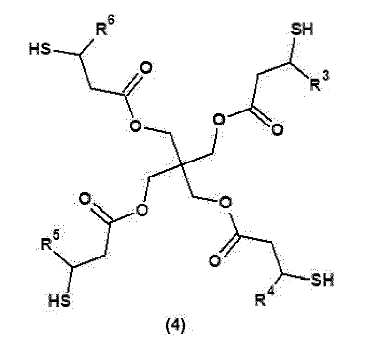 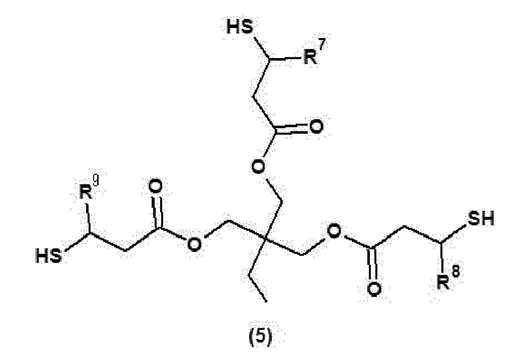 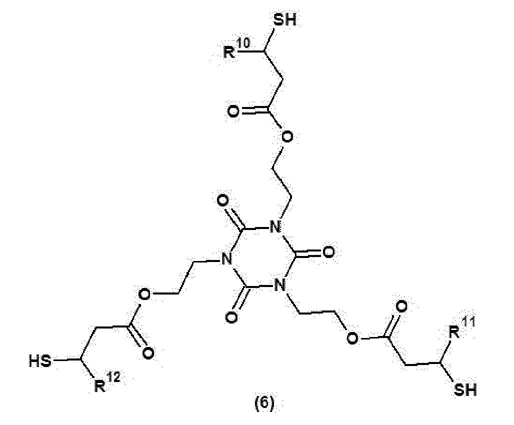 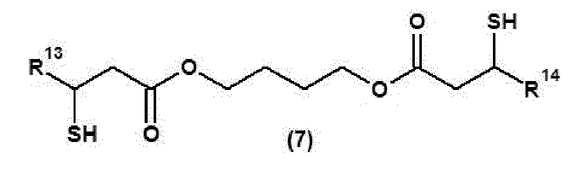 wherein R³-R¹⁴ each independently represent H or CH₃.

8. A molded article produced using the photocurable composition for molding according to any one of claims 1-7.

9. A molded optical article produced using the photocurable composition for molding according to any one of claims 1-7 and having a minimum thickness of 5 mm or more.
